# EUROPEAN PATENT APPLICATION

(11) **EP 4 616 980 A1**
(43) Date of publication of application: **17.09.2025**
(21) Application number: 23888656.8
(22) Date of filing: 06.11.2023
(51) Int. Cl.: B23B 27/14, B23B 1/00

(54) **CUTTING INSERT AND MACHINING METHOD**

(30) Priority: 07.11.2022 JP 2022178143
(71) Applicant: Sumitomo Electric Hardmetal Corp., Itami-shi, Hyogo 664-0016 (JP)
(72) Inventor: MOROGUCHI, Hironari, Itami-shi, Hyogo 664-0016 (JP); YOSHIMURA, Aya, Itami-shi, Hyogo 664-0016 (JP); MATSUDA, Yusuke, Itami-shi, Hyogo 664-0016 (JP); KUKINO, Satoru, Itami-shi, Hyogo 664-0016 (JP)
(74) Representative: Boult Wade Tennant LLP
(86) International application number: PCT/JP2023/039890
(87) International publication number: WO 2024/101308

(57) **Abstract**

A cutting insert includes: a rake face; a flank face; and a cutting edge constituted of a ridgeline between the rake face and the flank face. The cutting edge has a first cutting edge portion for corner processing, a second cutting edge portion for pulling processing, a third cutting edge portion for finished-surface processing, a first connection cutting edge portion, and a second connection cutting edge portion. The third cutting edge portion is disposed between the first cutting edge portion and the second cutting edge portion. The first cutting edge portion has a curved shape. A curvature radius of the first cutting edge portion is 0.1 mm or more and 2.4 mm or less. The second cutting edge portion has a straight line shape or a curved shape having a curvature radius of 3 mm or more. The third cutting edge portion has a straight line shape or a curved shape having a curvature radius of 3 mm or more. Each of the first connection cutting edge portion and the second connection cutting edge portion has a curved shape.

## Description

### TECHNICAL FIELD

The present disclosure relates to a cutting insert and a processing method. The present application claims priority based on Japanese Patent Application No. 2022-178143 filed on November 7, 2022. The entire contents of the Japanese Patent Application are incorporated herein by reference.

### BACKGROUND ART

WO 2019/087496 (PTL 1) discloses a cutting insert having a rake face, a flank face, and a chamfer disposed between the rake face and the flank face.

### CITATION LIST

### PATENT LITERATURE

PTL 1: WO 2019/087496

### SUMMARY OF INVENTION

A cutting insert according to one embodiment of the present disclosure includes a rake face, a flank face, and a cutting edge constituted of a ridgeline between the rake face and the flank face. The cutting insert has a surface involved in cutting, and the surface is composed of at least any one of a cBN-based sintered material, a diamond-based sintered material, a ceramic, a cermet, or a cemented carbide. The cutting edge has a first cutting edge portion for corner processing, a second cutting edge portion for pulling processing, a third cutting edge portion for finished-surface processing, a first connection cutting edge portion that connects the first cutting edge portion and the third cutting edge portion, and a second connection cutting edge portion that connects the second cutting edge portion and the third cutting edge portion. The third cutting edge portion is disposed between the first cutting edge portion and the second cutting edge portion. The first cutting edge portion has a curved shape. A curvature radius of the first cutting edge portion is 0.1 mm or more and 2.4 mm or less. The second cutting edge portion has a straight line shape or a curved shape having a curvature radius of 3 mm or more. The third cutting edge portion has a straight line shape or a curved shape having a curvature radius of 3 mm or more. Each of the first connection cutting edge portion and the second connection cutting edge portion has a curved shape.

### BRIEF DESCRIPTION OF DRAWINGS

Fig. 1 is a schematic perspective view showing a configuration of a cutting insert according to the present embodiment.
Fig. 2 is a schematic plan view showing a configuration of a cutting tool according to the present embodiment.
Fig. 3 is an enlarged schematic diagram of a region III in Fig. 1.
Fig. 4 is a schematic cross sectional view along a line IV-IV of Fig. 2.
Fig. 5 is a schematic diagram showing a cross section perpendicular to a line tangential to a first cutting edge portion.
Fig. 6 is a schematic diagram showing a cross section perpendicular to a line tangential to a second cutting edge portion.
Fig. 7 is a schematic diagram showing a cross section perpendicular to a line tangential to a third cutting edge portion.
Fig. 8 is a schematic perspective view showing a first flank region.
Fig. 9 is a schematic perspective view showing a second flank region.
Fig. 10 is a schematic diagram showing a first processing method according to the present embodiment.
Fig. 11 is an enlarged schematic diagram showing a processing state.
Fig. 12 is a schematic side view showing a lateral rake angle of a second cutting edge portion.
Fig. 13 is a schematic diagram showing a second processing method according to the present embodiment.

### DETAILED DESCRIPTION

[Problem to be Solved by the Present Disclosure]

For example, when high-efficiency processing for hardened steel is performed, cutting resistance becomes high, with the result that breakage of a cutting edge is likely to occur. Therefore, it is difficult to improve a tool life of a cutting insert.

It is an object of the present disclosure to provide a cutting insert to improve a tool life.

### [Advantageous Effect of the Present Disclosure]

According to the present disclosure, it is possible to provide a cutting insert to improve a tool life.

### [Description of Embodiments]

First, embodiments of the present disclosure will be listed and described.
(1) A cutting insert 100 according to one embodiment of the present disclosure includes a rake face 50, a flank face 30, and a cutting edge 10 constituted of a ridgeline 20 between rake face 50 and flank face 30. Cutting insert 100 has a surface involved in cutting, and the surface is composed of at least any one of a cBN-based sintered material, a diamond-based sintered material, a ceramic, a cermet, or a cemented carbide. Cutting edge 10 has a first cutting edge portion 1 for corner processing, a second cutting edge portion 2 for pulling processing, a third cutting edge portion 3 for finished-surface processing, a first connection cutting edge portion 11 that connects first cutting edge portion 1 and third cutting edge portion 3, and a second connection cutting edge portion 12 that connects second cutting edge portion 2 and third cutting edge portion 3. Third cutting edge portion 3 is disposed between first cutting edge portion 1 and second cutting edge portion 2. First cutting edge portion 1 has a curved shape. A curvature radius of first cutting edge portion 1 is 0.1 mm or more and 2.4 mm or less. Second cutting edge portion 2 has a straight line shape or a curved shape having a curvature radius of 3 mm or more. Third cutting edge portion 3 has a straight line shape or a curved shape having a curvature radius of 3 mm or more. Each of first connection cutting edge portion 11 and second connection cutting edge portion 12 has a curved shape.
(2) In cutting insert 100 according to (1), a curvature radius of each of first connection cutting edge portion 11 and second connection cutting edge portion 12 may be 0.2 mm or more.
(3) In cutting insert 100 according to (1) or (2), a flank angle of each of first cutting edge portion 1, second cutting edge portion 2, and third cutting edge portion 3 may be 3° or more and 20° or less.
(4) In cutting insert 100 according to any one of (1) to (3), cutting edge 10 may have a fourth cutting edge portion 4 contiguous to first cutting edge portion 1. First cutting edge portion 1 may be located between third cutting edge portion 3 and fourth cutting edge portion 4. Flank face 30 may have a first flank region 71 and a second flank region 72. First flank region 71 may be contiguous to fourth cutting edge portion 4. Second flank region 72 may be contiguous to first cutting edge portion 1, second cutting edge portion 2, third cutting edge portion 3, first connection cutting edge portion 11, and second connection cutting edge portion 12. A flank angle of first flank region 71 may be 0°. A flank angle of second flank region 72 may be 3° or more and 20° or less. When an area of first flank region 71 is defined as a first area and an area of second flank region 72 is defined as a second area, a value obtained by dividing the first area by a sum of the first area and the second area may be 0.05 or more and 0.95 or less.
(5) In cutting insert 100 according to any one of (1) to (3), cutting edge 10 may have a fourth cutting edge portion 4 contiguous to first cutting edge portion 1. First cutting edge portion 1 may be located between third cutting edge portion 3 and fourth cutting edge portion 4. Ridgeline 20 may have a first ridgeline region 81 and a second ridgeline region 82. First ridgeline region 81 may include fourth cutting edge portion 4. Second ridgeline region 82 may include first cutting edge portion 1, second cutting edge portion 2, third cutting edge portion 3, first connection cutting edge portion 11, and second connection cutting edge portion 12. A flank angle of first ridgeline region 81 may be 0°. A flank angle of second ridgeline region 82 may be 3° or more and 20° or less. When a length of first ridgeline region 81 is defined as a first length and a length of second ridgeline region 82 is defined as a second length, a value obtained by dividing the first length by a sum of the first length and the second length may be more than 0.05 and 0.95 or less.
(6) In cutting insert 100 according to any one of (1) to (3), cutting edge 10 may have a fourth cutting edge portion 4 contiguous to first cutting edge portion 1. First cutting edge portion 1 may be located between third cutting edge portion 3 and fourth cutting edge portion 4. First cutting edge portion 1 may consist of a first region 1a and a second region 1b contiguous to first region 1a. Cutting edge 10 may consist of a first cutting portion 91 and a second cutting portion 92. First cutting portion 91 may consist of first region 1a, second cutting edge portion 2, third cutting edge portion 3, first connection cutting edge portion 11, and second connection cutting edge portion 12. Second cutting portion 92 may consist of second region 1b and fourth cutting edge portion 4 contiguous to second region 1b.
(7) A processing method according to one embodiment of the present disclosure is a processing method using cutting insert 100 according to any one of (1) to (6). In the pulling processing for processing a workpiece using second cutting edge portion 2, a lateral rake angle of second cutting edge portion 2 may be -20° or more and 10° or less.
(8) A processing method according to one embodiment of the present disclosure is a processing method using cutting insert 100 according to any one of (1) to (6). In pushing processing, a lateral cutting edge angle of first cutting edge portion 1 may be 30° or more and less than 70°. In the pulling processing, a lateral cutting edge angle of second cutting edge portion 2 may be 70° or more and less than 89°.

### [Details of Embodiments of the Present Disclosure]

Specific examples of a cutting insert according to one embodiment of the present disclosure will be described below with reference to figures. In the below-described figures, the same or corresponding portions are denoted by the same reference characters and will not be described repeatedly.

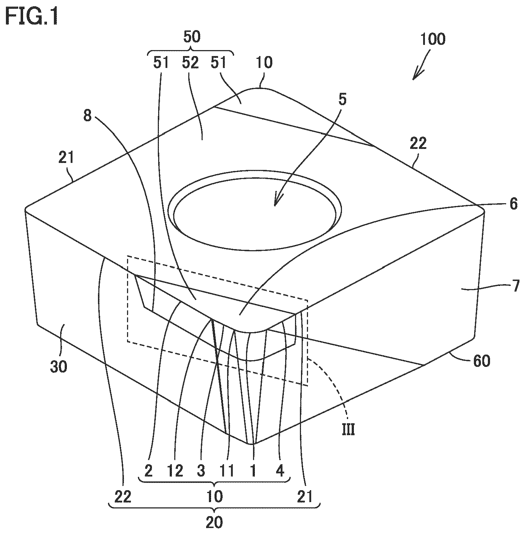

Fig. 1 is a schematic perspective view showing a configuration of a cutting insert 100 according to the present embodiment. As shown in Fig. 1, cutting insert 100 according to the present embodiment has a cutting edge member 6 and a base metal 7. Cutting edge member 6 is attached to base metal 7. Cutting edge member 6 is involved in cutting. The shape of base metal 7 when viewed in a plan view is not particularly limited, but is, for example, a rhombic shape. Cutting edge member 6 is joined to an acute corner portion of base metal 7. Base metal 7 is composed of, for example, a cemented carbide, a cermet, or the like. Cutting insert 100 according to the present embodiment is formed by joining cutting edge member 6 to the acute corner portion of base metal 7; however, a whole of cutting insert 100 may be constituted of cutting edge member 6.

The present disclosure is also applied to cutting inserts 100 having polygonal shapes other than the rhombic shape. Since the shapes of the cutting edges are the same thereamong, only cutting insert 100 having the rhombic shape is illustrated. The acute corner portion of base metal 7 is provided with a counterbore portion 8 obtained by partially depressing a portion of the upper surface. Cutting edge member 6 is joined to base metal 7 at counterbore portion 8 by joining means such as brazing.

Cutting edge member 6 is composed of a cBN-based sintered material, a diamond-based sintered material, a ceramic, a cermet, or a cemented carbide. The cBN-based sintered material is a sintered material including 10% or more and 99.9% or less of cBN (cubic boron nitride) in volume ratio. The diamond-based sintered material is a sintered material including 10% or more and 99.9% or less of diamond in volume ratio. The ceramic is not particularly limited; however, a ceramic such as alumina (Al₂O₃), silicon nitride (Si₃N₄), or titanium carbide (TiC) can be suitably used, for example. The cermet is not particularly limited; however, a nitride-based cermet or a carbide-based cermet can be suitably used, for example.

Cutting insert 100 according to the present embodiment has a rake face 50, a flank face 30, a cutting edge 10, and a bottom surface 60. Cutting edge 10 is constituted of a ridgeline 20 between rake face 50 and flank face 30. Ridgeline 20 has a cutting edge 10, a first ridgeline portion 21, and a second ridgeline portion 22. Cutting edge 10 is a portion of ridgeline 20. Cutting edge 10 has a first cutting edge portion 1 for corner processing, a second cutting edge portion 2 for pulling processing, a third cutting edge portion 3 for finished-surface processing, a first connection cutting edge portion 11, a second connection cutting edge portion 12, and a fourth cutting edge portion 4.

First connection cutting edge portion 11 connects first cutting edge portion 1 and third cutting edge portion 3. First connection cutting edge portion 11 is located between first cutting edge portion 1 and third cutting edge portion 3. Second connection cutting edge portion 12 connects second cutting edge portion 2 and third cutting edge portion 3. Second connection cutting edge portion 12 is located between second cutting edge portion 2 and third cutting edge portion 3. Third cutting edge portion 3 is disposed between first cutting edge portion 1 and second cutting edge portion 2. Third cutting edge portion 3 connects first connection cutting edge portion 11 and second connection cutting edge portion 12. Fourth cutting edge portion 4 is contiguous to first cutting edge portion 1. First cutting edge portion 1 is located between third cutting edge portion 3 and fourth cutting edge portion 4.

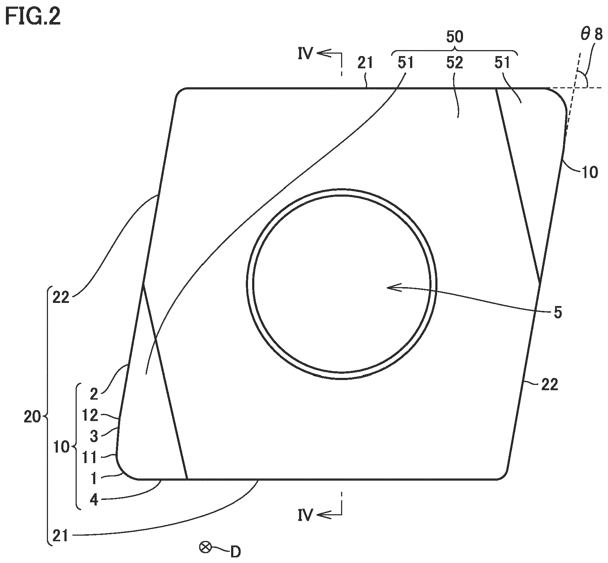

Fig. 2 is a schematic plan view showing a configuration of a cutting tool according to the present embodiment. The schematic plan view shown in Fig. 2 shows a state when viewed along a straight line perpendicular to rake face 50. A point of view is at a position facing rake face 50. A line-of-sight direction D is a direction from rake face 50 toward bottom surface 60.

As shown in Fig. 2, first cutting edge portion 1 has a curved shape. First cutting edge portion 1 is curved to protrude outward. First cutting edge portion 1 is a corner cutting edge portion. When viewed along the straight line perpendicular to rake face 50, the curvature radius of first cutting edge portion 1 is 0.1 mm or more and 2.4 mm or less. The curvature radius of first cutting edge portion 1 is not particularly limited, but may be 0.2 mm or more and 2.2 mm or less, 0.4 mm or more and 2.0 mm or less, or 0.6 mm or more and 1.8 mm or less.

As shown in Fig. 2, when viewed along the straight line perpendicular to rake face 50, second cutting edge portion 2 has a straight line shape or a curved shape having a curvature radius of 3 mm or more. When second cutting edge portion 2 has the curved shape, the curvature radius of second cutting edge portion 2 may be 5 mm or more, 10 mm or more, 30 mm or more, or 50 mm or more. The curvature radius of second cutting edge portion 2 may be 150 mm or less, 130 mm or less, or 100 mm or less.

As shown in Fig. 2, when viewed along the straight line perpendicular to rake face 50, third cutting edge portion 3 has a straight line shape or a curved shape having a curvature radius of 3 mm or more. When third cutting edge portion 3 has the curved shape, the curvature radius of third cutting edge portion 3 may be 5 mm or more, 10 mm or more, 20 mm or more, or 40 mm or more. The curvature radius of third cutting edge portion 3 may be 80 mm or less, 70 mm or less, or 60 mm or less.

The length of second cutting edge portion 2 may be larger than the length of third cutting edge portion 3. The length of second cutting edge portion 2 may be 1.5 times or more as large as the length of third cutting edge portion 3, or may be twice or more as large as the length of third cutting edge portion 3. The length of second cutting edge portion 2 may be 10 times or less as large as the length of third cutting edge portion 3, or may be 5 times or less as large as the length of third cutting edge portion 3. It should be noted that when the cutting edge portion has the curved shape, the length of the cutting edge portion is regarded as a length when the curved line is formed into a straight line.

Each of first connection cutting edge portion 11 and second connection cutting edge portion 12 is curved to protrude outward, for example. When viewed along the straight line perpendicular to rake face 50, the curvature radius of each of first connection cutting edge portion 11 and second connection cutting edge portion 12 is, for example, 0.2 mm or more. The curvature radius of each of first connection cutting edge portion 11 and second connection cutting edge portion 12 may be 0.3 mm or more, or 0.5 mm or more. The curvature radius of each of first connection cutting edge portion 11 and second connection cutting edge portion 12 may be less than 3 mm or less than 2 mm. First connection cutting edge portion 11 and each of first cutting edge portion 1 and third cutting edge portion 3 adjacent thereto preferably have different curvature radii. Second connection cutting edge portion 12 and each of second cutting edge portion 2 and third cutting edge portion 3 adjacent thereto preferably have different curvature radii. Each of first connection cutting edge portion 11 and second connection cutting edge portion 12 is not involved in cutting structurally and functionally.

As shown in Fig. 2, each of first ridgeline portion 21 and second ridgeline portion 22 has a straight line shape. First ridgeline portion 21 is contiguous to fourth cutting edge portion 4. Second ridgeline portion 22 is contiguous to second cutting edge portion 2. The length of first ridgeline portion 21 may be larger than the length of second ridgeline portion 22. The length of first ridgeline portion 21 may be larger than the length of fourth cutting edge portion 4. The length of second ridgeline portion 22 may be larger than the length of second cutting edge portion 2. Each of first ridgeline portion 21 and second ridgeline portion 22 is constituted of base metal 7. Cutting edge 10 is constituted of cutting edge member 6.

Rake face 50 has a first rake face portion 51 and a second rake face portion 52. First rake face portion 51 is constituted of cutting edge member 6. Second rake face portion 52 is constituted of base metal 7. A through hole 5 is formed in second rake face portion 52. Cutting edge 10 may be formed at each of two positions on a diagonal line of the rhombic shape. The shape of cutting edge 10 may be two-fold symmetrical with respect to an axis extending through through hole 5. An angle (apex angle θ8 of first cutting edge portion 1) formed by a straight line along first ridgeline portion 21 and a straight line along second ridgeline portion 22 is, for example, 30° or more and 90° or less. Apex angle θ8 of first cutting edge portion 1 may be, for example, 35°, 55°, 60°, 70°, or 80°.

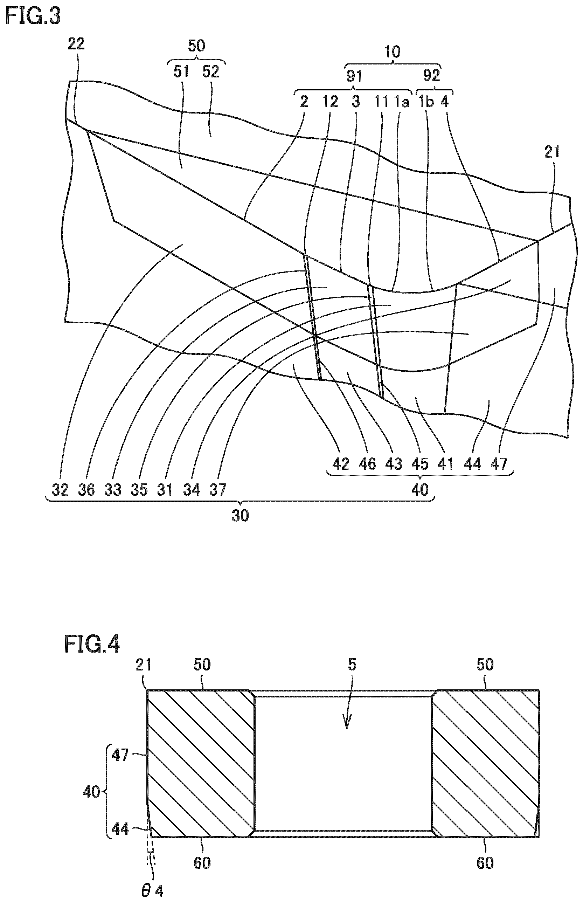

Fig. 3 is an enlarged schematic diagram of a region III in Fig. 1. As shown in Fig. 3, flank face 30 has a first flank face portion 31, a second flank face portion 32, a third flank face portion 33, a fourth flank face portion 34, a fifth flank face portion 35, a sixth flank face portion 36, a seventh flank face portion 37, and a side surface portion 40. First flank face portion 31 is contiguous to first cutting edge portion 1. Second flank face portion 32 is contiguous to second cutting edge portion 2. Third flank face portion 33 is contiguous to third cutting edge portion 3.

Fourth flank face portion 34 is contiguous to fourth cutting edge portion 4. Fifth flank face portion 35 is connected to first connection cutting edge portion 11. Sixth flank face portion 36 is contiguous to second connection cutting edge portion 12. Seventh flank face portion 37 is contiguous to each of first flank face portion 31 and fourth flank face portion 34. Each of first flank face portion 31, second flank face portion 32, third flank face portion 33, fourth flank face portion 34, fifth flank face portion 35, sixth flank face portion 36, and seventh flank face portion 37 is constituted of cutting edge member 6.

Side surface portion 40 has a first side surface region 41, a second side surface region 42, a third side surface region 43, a fourth side surface region 44, a fifth side surface region 45, a sixth side surface region 46, and a seventh side surface region 47. First side surface region 41 is contiguous to each of first flank face portion 31 and bottom surface 60. Second side surface region 42 is contiguous to each of second flank face portion 32, second ridgeline portion 22, and bottom surface 60. Third side surface region 43 is contiguous to each of third flank face portion 33 and bottom surface 60.

Fourth side surface region 44 is contiguous to seventh flank face portion 37. Fifth side surface region 45 is contiguous to each of fifth flank face portion 35 and bottom surface 60. Sixth side surface region 46 is contiguous to each of sixth flank face portion 36 and bottom surface 60. Seventh side surface region 47 is contiguous to each of fourth flank face portion 34, first ridgeline portion 21, and bottom surface 60. Side surface portion 40 is constituted of base metal 7.

As shown in Fig. 3, cutting edge 10 consists of a first cutting portion 91 and a second cutting portion 92. First cutting portion 91 consists of a first region 1a of first cutting edge portion 1, second cutting edge portion 2, third cutting edge portion 3, first connection cutting edge portion 11, and second connection cutting edge portion 12. Second cutting portion 92 consists of a second region 1b of first cutting edge portion 1 and fourth cutting edge portion 4. First cutting edge portion 1 consists of first region 1a and second region 1b. First region 1a is contiguous to second region 1b. Each of first ridgeline portion 21 and second ridgeline portion 22 does not constitute cutting edge 10.

Fig. 4 is a schematic cross sectional view along a line **IV-IV** of Fig. 2. As shown in Fig. 4, through hole 5 extends through base metal 7. Through hole 5 is opened in each of rake face 50 and bottom surface 60. Seventh side surface region 47 is inclined perpendicularly to rake face 50. Fourth side surface region 44 is inclined with respect to seventh side surface region 47. An inclination angle (fourth angle θ4) of fourth side surface region 44 with respect to seventh side surface region 47 is, for example, 3° or more and 20° or less.

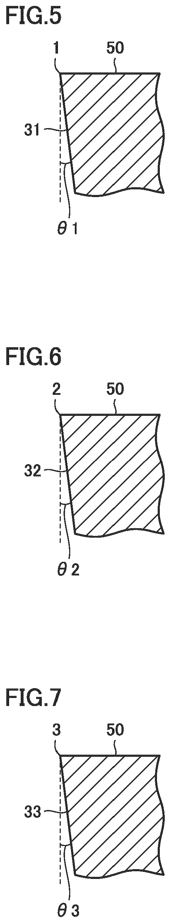

Fig. 5 is a schematic diagram showing a cross section perpendicular to a line tangential to first cutting edge portion 1. As shown in Fig. 5, first flank face portion 31 is inclined inward with respect to a plane perpendicular to rake face 50. A flank angle (first angle θ1) of first cutting edge portion 1 is an inclination angle of first flank face portion 31 with respect to the plane perpendicular to rake face 50. First angle θ1 may be, for example, 3° or more and 20° or less, 5° or more and 18° or less, or 7° or more and 15° or less.

Fig. 6 is a schematic diagram showing a cross section perpendicular to a line tangential to second cutting edge portion 2. As shown in Fig. 6, second flank face portion 32 is inclined inward with respect to the plane perpendicular to rake face 50. A flank angle (second angle θ2) of second cutting edge portion 2 is an inclination angle of second flank face portion 32 with respect to the plane perpendicular to rake face 50. Second angle θ2 may be, for example, 3° or more and 20° or less, 5° or more and 18° or less, or 7° or more and 15° or less.

Fig. 7 is a schematic diagram showing a cross section perpendicular to a line tangential to third cutting edge portion 3. As shown in Fig. 7, third flank face portion 33 is inclined inward with respect to the plane perpendicular to rake face 50. A flank angle (third angle θ3) of third cutting edge portion 3 is an inclination angle of third flank face portion 33 with respect to the plane perpendicular to rake face 50. Third angle θ3 may be, for example, 3° or more and 20° or less, 5° or more and 18° or less, or 7° or more and 15° or less.

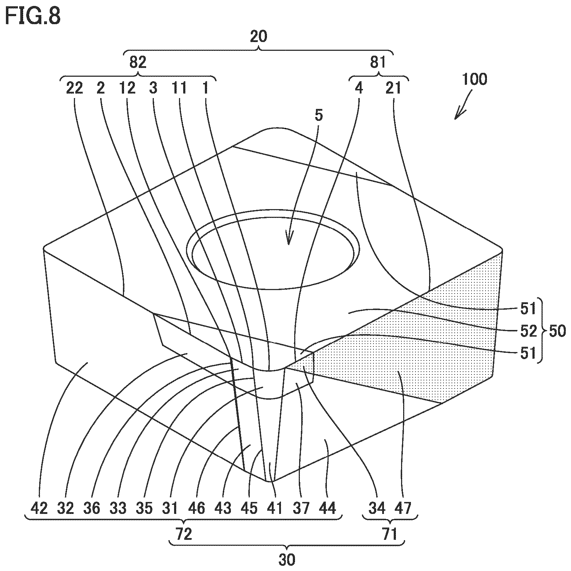

Fig. 8 is a schematic perspective view showing a first flank region 71. As shown in Fig. 8, flank face 30 has first flank region 71 and a second flank region 72. First flank region 71 is constituted of fourth flank face portion 34 and seventh side surface region 47. A region indicated by hatching in Fig. 8 corresponds to first flank region 71. A flank angle of first flank region 71 is 0°. In other words, first flank region 71 is perpendicular to rake face 50. The flank angle of first flank region 71 is an inclination angle of first flank region 71 with respect to the plane perpendicular to rake face 50.

Ridgeline 20 has a first ridgeline region 81 and a second ridgeline region 82. First ridgeline region 81 is constituted of fourth cutting edge portion 4 and first ridgeline portion 21. In the case of the shape of cutting insert 100 shown in Fig. 8, the length of first ridgeline region 81 is the length from one corner portion of cutting insert 100 to the end portion of fourth cutting edge portion 4. First ridgeline region 81 is contiguous to first flank region 71. A flank angle of first ridgeline region 81 is 0°. The flank angle of first ridgeline region 81 is an inclination angle of first flank region 71 in a cross section perpendicular to a line tangential to first ridgeline region 81.

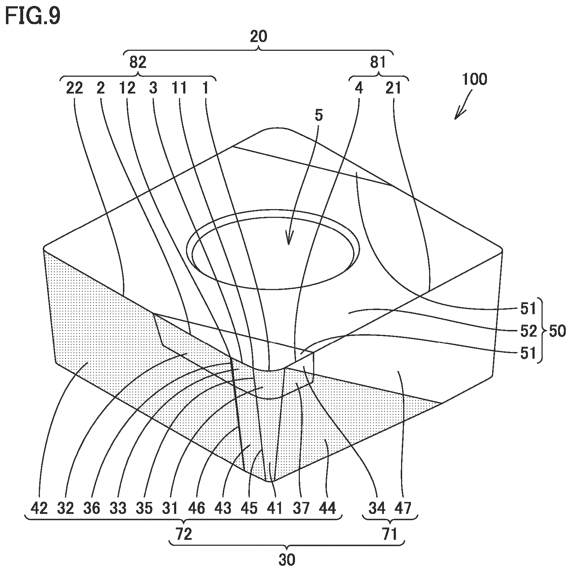

Fig. 9 is a schematic perspective view showing second flank region 72. As shown in Fig. 9, second flank region 72 is constituted of a region of flank face 30 other than first flank region 71. Second flank region 72 is constituted of first flank face portion 31, second flank face portion 32, third flank face portion 33, fifth flank face portion 35, sixth flank face portion 36, seventh flank face portion 37, first side surface region 41, second side surface region 42, third side surface region 43, fourth side surface region 44, fifth side surface region 45, and sixth side surface region 46. A region indicated by hatching in Fig. 9 corresponds to second flank region 72. A flank angle of second flank region 72 is 3° or more and 20° or less. The flank angle of second flank region 72 is an inclination angle of second flank region 72 with respect to the plane perpendicular to rake face 50. The flank angle of second flank region 72 corresponds to fourth angle θ4 (see Fig. 4).

Second ridgeline region 82 is constituted of first cutting edge portion 1, second cutting edge portion 2, third cutting edge portion 3, first connection cutting edge portion 11, second connection cutting edge portion 12, and second ridgeline portion 22. In the case of the shape of cutting insert 100 shown in Fig. 9, the length of second ridgeline region 82 is the length from the other corner of cutting insert 100 to the end portion of first cutting edge portion 1. Second ridgeline region 82 is contiguous to second flank region 72. A flank angle of second ridgeline region 82 is 3° or more and 20° or less. The flank angle of second ridgeline region 82 is an inclination angle of second flank region 72 in a cross section perpendicular to a line tangential to second ridgeline region 82.

When the area (surface area) of first flank region 71 is defined as a first area and the area (surface area) of second flank region 72 is defined as a second area, a value obtained by dividing the first area by the sum of the first area and the second area is, for example, 0.05 or more and 0.95 or less. The value obtained by dividing the first area by the sum of the first area and the second area may be 0.1 or more and 0.9 or less, or may be 0.2 or more and 0.8 or less.

When the length of first ridgeline region 81 is defined as a first length and the length of second ridgeline region 82 is defined as a second length, a value obtained by dividing the first length by the sum of the first length and the second length is, for example, more than 0.05 and 0.95 or less. The value obtained by dividing the first length by the sum of the first length and the second length may be 0.1 or more and 0.9 or less, or may be 0.2 or more and 0.8 or less.

Next, a processing method according to the present embodiment will be described. In the processing method according to the present embodiment, a workpiece is processed using cutting insert 100 according to the present embodiment.

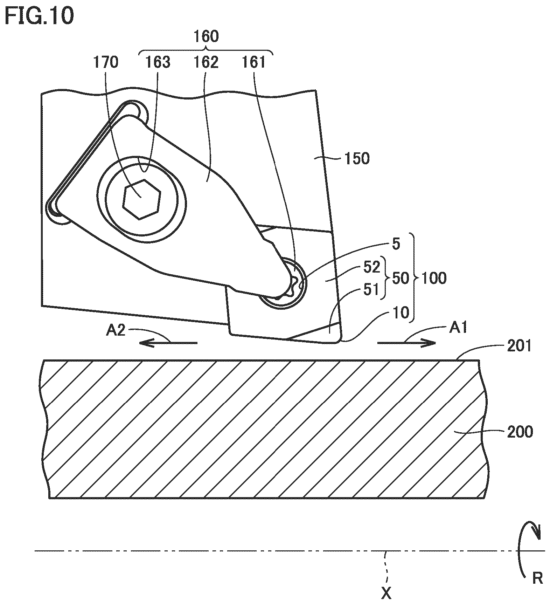

Fig. 10 is a schematic diagram showing a first processing method according to the present embodiment. As shown in Fig. 10, cutting insert 100 is attached to a holder 150 using a retention member 160. Retention member 160 has a main body portion 162 and an insertion portion 161. Insertion portion 161 is inserted into through hole 5 of cutting insert 100. An attachment hole 163 is formed in main body portion 162. A fastening screw 170 is inserted in attachment hole 163. Thus, retention member 160 is fixed to holder 150. Retention member 160 draws cutting insert 100 toward holder 150, thereby fixing cutting insert 100 to holder 150.

Cutting insert 100 according to the present embodiment can perform outer-diameter processing. Workpiece 200 has an outer peripheral surface 201. Pushing processing is processing performed while moving cutting insert 100 in a first feed direction A1. First feed direction A1 is a direction from holder 150 toward cutting insert 100. In the pushing processing, workpiece 200 is processed using first cutting edge portion 1. Pulling processing is processing performed while moving cutting insert 100 in a second feed direction A2. Second feed direction A2 is a direction from cutting insert 100 toward holder 150. In the pulling processing, workpiece 200 is processed using second cutting edge portion 2. Each of first feed direction A1 and second feed direction A2 is parallel to a rotation axis X of workpiece 200. Workpiece 200 is rotated about rotation axis X in a rotation direction R.

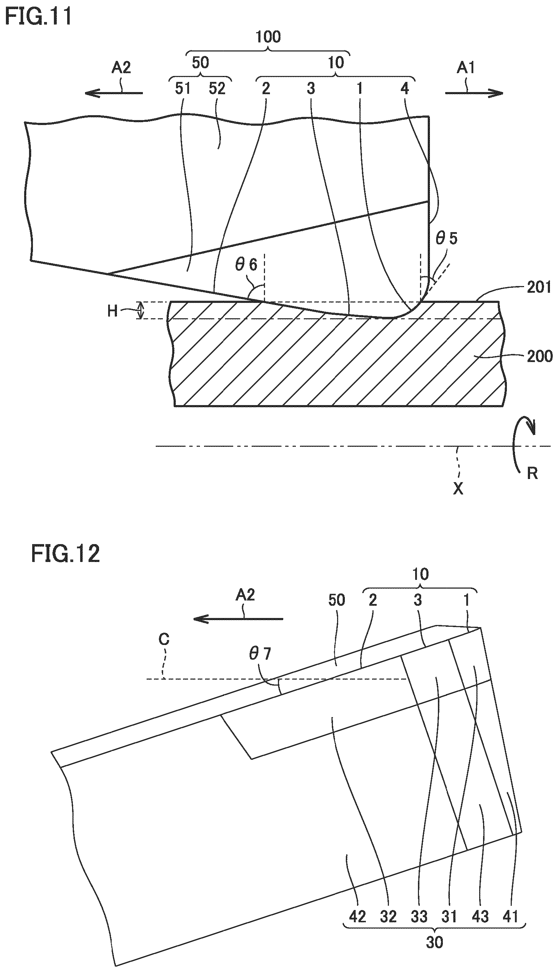

Fig. 11 is an enlarged schematic diagram showing a processing state. The enlarged schematic diagram shown in Fig. 11 shows a state when viewed along the straight line perpendicular to rake face 50. Cutting edge 10 cuts into workpiece 200 by a cut-in amount H. In the pushing processing, a lateral cutting edge angle of first cutting edge portion 1 is fifth angle θ5. Fifth angle θ5 is an angle formed by a line tangential to first cutting edge portion 1 at a contact point between outer peripheral surface 201 of workpiece 200 and first cutting edge portion 1 and a straight line perpendicular to rotation axis X of workpiece 200. Fifth angle θ5 is, for example, 30° or more and less than 70°. Fifth angle θ5 may be 35° or more and less than 65°, or may be 40° or more and less than 60°.

As shown in Fig. 11, in the pulling processing, a lateral cutting edge angle of second cutting edge portion 2 is sixth angle θ6. Sixth angle θ6 is an angle formed by a line tangential to second cutting edge portion 2 at a contact point between outer peripheral surface 201 of workpiece 200 and second cutting edge portion 2 and the straight line perpendicular to rotation axis X of workpiece 200. Sixth angle θ6 is, for example, 70° or more and less than 89°. Sixth angle θ6 may be 73° or more and less than 86°, or may be 76° or more and less than 83°. Sixth angle θ6 may be larger than fifth angle θ5.

Fig. 12 is a schematic side view showing the lateral rake angle of second cutting edge portion 2. The schematic side view shown in Fig. 12 shows a state when viewed along the straight line perpendicular to rotation axis X of workpiece 200.

In the pulling processing for processing workpiece 200 using second cutting edge portion 2, cutting insert 100 is fed in second feed direction A2 along a direction parallel to rotation axis X of workpiece 200. As shown in Fig. 12, when viewed in the direction perpendicular to rotation axis X of workpiece 200, lateral rake angle θ7 of second cutting edge portion 2 is an inclination angle of second cutting edge portion 2 with respect to a straight line C parallel to rotation axis X of workpiece 200. The lateral rake angle of second cutting edge portion 2 is seventh angle θ7. Seventh angle θ7 may be, for example, -20° or more and 10° or less. Seventh angle θ7 may be -15° or more and 8° or less, or may be -10° or more and 5° or less. It should be noted that when cutting edge 10 advances before rake face 50 during cutting, the lateral rake angle is a positive angle. On the other hand, when cutting edge 10 advances after rake face 50 during cutting, the lateral rake angle is a negative angle.

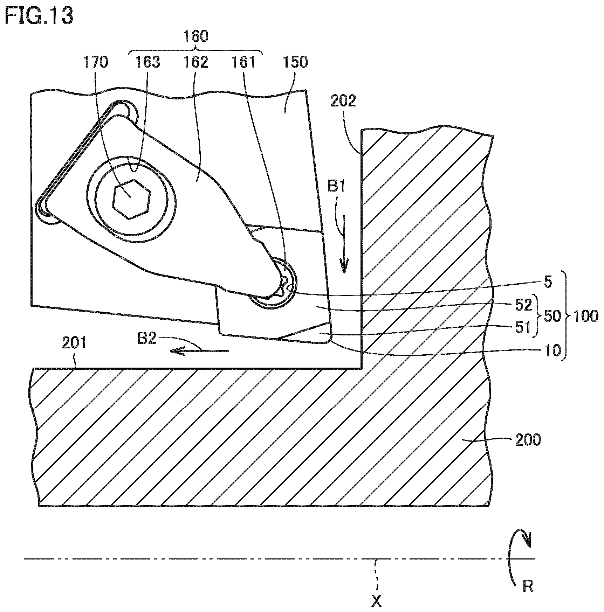

Fig. 13 is a schematic diagram showing a second processing method according to the present embodiment. As shown in Fig. 13, in the second processing method according to the present embodiment, end-surface processing and outer-diameter processing may be performed. A workpiece 200 has an outer peripheral surface 201 and an end surface 202. Outer peripheral surface 201 is parallel to rotation axis X of workpiece 200. End surface 202 is perpendicular to rotation axis X of workpiece 200. Each of the pushing processing and the corner processing is processing performed while moving cutting insert 100 in a third feed direction B1. In each of the pushing processing and the corner processing, workpiece 200 is processed using first cutting edge portion 1. The pulling processing is processing performed while moving cutting insert 100 in a fourth feed direction B2. In pulling processing, workpiece 200 is processed using second cutting edge portion 2. Third feed direction B1 is perpendicular to rotation axis X of workpiece 200. Fourth feed direction B2 is parallel to rotation axis X of workpiece 200.

Next, functions and effects of cutting insert 100 and the processing method according to the present embodiment will be described.

In cutting insert 100 according to the present embodiment, cutting edge 10 has first cutting edge portion 1 for corner processing, second cutting edge portion 2 for pulling processing, third cutting edge portion 3 for finished-surface processing, first connection cutting edge portion 11 that connects first cutting edge portion 1 and third cutting edge portion 3, and second connection cutting edge portion 12 that connects second cutting edge portion 2 and third cutting edge portion 3. Third cutting edge portion 3 is disposed between first cutting edge portion 1 and second cutting edge portion 2. First cutting edge portion 1 has a curved shape. The curvature radius of first cutting edge portion 1 is 0.1 mm or more and 2.4 mm or less.

Since cutting insert 100 according to the present embodiment has first cutting edge portion 1 for corner processing, the corner processing and profile processing can be performed. Further, since cutting insert 100 according to the present embodiment has second cutting edge portion 2 for pulling processing, the pulling processing can be performed.

By increasing lateral cutting edge angle θ6 of second cutting edge portion 2, feeding component force in the pulling processing can be reduced. Therefore, breakage of cutting edge 10 can be suppressed. As a result, the tool life can be improved. Further, in the pulling processing, cutting insert 100 can be suppressed from being pulled out from holder 150.

Furthermore, since cutting insert 100 according to the present embodiment has third cutting edge portion 3 for finished-surface processing, a finished-surface roughness can be significantly improved. Therefore, an excellent surface roughness can be stably obtained even in high-efficiency processing. It should be noted that the high-efficiency processing is processing in which the volume of workpiece 200 that can be removed per unit time is, for example, 10 cm³/minute or more.

In cutting insert 100 according to the present embodiment, the flank angle of each of first cutting edge portion 1, second cutting edge portion 2, and third cutting edge portion 3 may be 3° or more and 20° or less. Since the flank angle of each of first cutting edge portion 1, second cutting edge portion 2, and third cutting edge portion 3 is the positive angle, cutting resistance in a thrust component force direction can be reduced. Therefore, dimensional precision can be stably improved.

In cutting insert 100 according to the present embodiment, flank face 30 may have first flank region 71 and second flank region 72. The flank angle of first flank region 71 may be 0°. The flank angle of second flank region 72 may be 3° or more and 20° or less. When the area of first flank region 71 is defined as the first area and the area of second flank region 72 is defined as the second area, the value obtained by dividing the first area by the second area may be 0.2 or more and 1 or less.

Each of first flank region 71 and second flank region 72 is a portion in contact with holder 150. First flank region 71 has a larger area of contact with holder 150 than second flank region 72. As the area of cutting insert 100 in contact with holder 150 becomes larger, restraint performance between holder 150 and cutting insert 100 becomes higher. As a result, cutting insert 100 is less likely to be pulled out from holder 150. When the value obtained by dividing the first area by the second area is 0.2 or more and 1 or less, cutting insert 100 can be further suppressed from being pulled out from holder 150.

In cutting insert 100 according to the present embodiment, ridgeline 20 may have first ridgeline region 81 and second ridgeline region 82. The flank angle of first ridgeline region 81 may be 0°. The flank angle of second ridgeline region 82 may be 3° or more and 20° or less. When the length of first ridgeline region 81 is defined as the first length and the length of second ridgeline region 82 is defined as the second length, the value obtained by dividing the first length by the second length may be more than 0.5 and 1 or less. Thus, cutting insert 100 can be further suppressed from being pulled out from holder 150, and chattering and undulation can be suppressed in the high-efficiency processing of the hardened steel.

In the processing method according to the present embodiment, in the pulling processing for processing workpiece 200 using second cutting edge portion 2, lateral rake angle θ7 of second cutting edge portion 2 may be -20° or more and 10° or less. Thus, a load on second cutting edge portion 2 can be reduced. As a result, breakage of second cutting edge portion 2 can be suppressed. Therefore, the life of cutting insert 100 can be further increased.

In the processing method according to the present embodiment, in the pushing processing, lateral cutting edge angle θ5 of first cutting edge portion 1 may be 30° or more and less than 70°. In the pulling processing, lateral cutting edge angle θ6 of second cutting edge portion 2 may be 70° or more and less than 89°. Thus, a load on each of first cutting edge portion 1 and second cutting edge portion 2 can be reduced. As a result, breakage of each of first cutting edge portion 1 and second cutting edge portion 2 can be suppressed. Therefore, the life of cutting insert 100 can be further increased.

### Examples

The present embodiment will be described more specifically with reference to examples. It should be noted that the present embodiment is not limited by these examples.

Cutting inserts 100 (samples S1 to S32) having the shapes shown in Tables 1 and 2 were produced experimentally and were evaluated in terms of cutting under the following conditions. Each of cutting inserts 100 of samples S1 to S32 has cutting edge member 6 and base metal 7 (see Fig. 1). In each of cutting inserts 100 of samples S1 to S32, the material of cutting edge member 6 was a cBN-based sintered material.

In Tables 1 and 2, a first cutting edge, a second cutting edge, a third cutting edge, a first connection portion, and a second connection portion corresponds to first cutting edge portion 1, second cutting edge portion 2, third cutting edge portion 3, first connection cutting edge portion 11, and second connection cutting edge portion 12, respectively. The flank angle is the flank angle of each of first cutting edge portion 1, second cutting edge portion 2, and third cutting edge portion 3. Seventh angle θ7 is the lateral rake angle of second cutting edge portion 2 (see Fig. 12). Fifth angle θ5 is the lateral cutting edge angle of first cutting edge portion 1 (see Fig. 11). Sixth angle θ6 is the lateral cutting edge angle of second cutting edge portion 2 (see Fig. 11).

Cutting inserts 100 of samples S1 to S22 and samples S26 to S32 are examples of the present disclosure. In each of cutting inserts 100 of samples S1 to S22 and samples S26 to S32, the curvature radius of first cutting edge portion 1 was 0.1 mm or more and 2.4 mm or less. Second cutting edge portion 2 had a straight line shape or a curved shape having a curvature radius of 3 mm or more. Third cutting edge portion 3 had a straight line shape or a curved shape having a curvature radius of 3 mm or more.

Cutting inserts 100 of samples S23 to S25 are comparative examples. In cutting insert 100 of sample S23, the curvature radius of first cutting edge portion 1 was 0.09 mm. In cutting insert 100 of sample S24, second cutting edge portion 2 had a curved shape having a curvature radius of 2 mm. In cutting insert 100 of sample S25, third cutting edge portion 3 has a curved shape having a curvature radius of 2 mm.

A workpiece 200 below was processed under the following cutting conditions with cutting insert 100 being attached to holder 150. A shorter one of a cutting time (tool life) when cutting edge 10 of cutting insert 100 was broken or a cutting time (tool life) when ten-point average roughness Rz of the processed surface exceeded 12.5 µm was evaluated.

### (Cutting Geometry)

Cutting edge inclination angle = -5°; front flank angle = 5°; lateral flank angle = 5°; front cutting edge angle = 5°

### (Workpiece)

High hardness steel SUJ2 (HRC62); diameter = 85 mm; length = 200 mm

### (Cutting Conditions)

Cutting rate: V = 200 m/minute; feed amount: f = 0.5 mm/rev.; cut-in amount: ap = 0.2 mm; wet type

### (Manner of Processing)

Outer-diameter processing (pushing processing and pulling processing) Results are collectively shown in Tables 1 and 2.

**[Table 1]**

| Item | First Cutting Edge | Second Cutting Edge | First Connection Portion | Third Cutting Edge | Second Connection Portion | Flank Angle of Each of First to Third Cutting Edges | θ7 | θ5 | θ6 | Tool Life |
|---|---|---|---|---|---|---|---|---|---|---|
| Unit | mm | mm | mm | mm | mm | ° | ° | ° | ° | km |
| S1 | 0.8 | Straight Line | 0.2 | 40 | 0.2 | 0 | -5 | 45 | 85 | 7.2 |
| S2 | 0.1 | Straight Line | 0.2 | 40 | 0.2 | 0 | -5 | 45 | 85 | 3.1 |
| S3 | 2.4 | Straight Line | 0.2 | 40 | 0.2 | 0 | -5 | 45 | 85 | 5.2 |
| S4 | 0.8 | 3 | 0.2 | 40 | 0.2 | 0 | -5 | 45 | 85 | 3.3 |
| S5 | 0.8 | 300 | 0.2 | 40 | 0.2 | 0 | -5 | 45 | 85 | 6.1 |
| S6 | 0.8 | Straight Line | 0.2 | 3 | 0.2 | 0 | -5 | 45 | 85 | 3.5 |
| S7 | 0.8 | Straight Line | 0.2 | 300 | 0.2 | 0 | -5 | 45 | 85 | 5.4 |
| S8 | 0.8 | Straight Line | 0.2 | 40 | 0.2 | 3 | -5 | 45 | 85 | 7.4 |
| S9 | 0.8 | Straight Line | 0.2 | 40 | 0.2 | 20 | -5 | 45 | 85 | 5.7 |
| S10 | 0.8 | Straight Line | 0.2 | 40 | 0.2 | 0 | 10 | 45 | 85 | 4.3 |
| S11 | 0.8 | Straight Line | 0.2 | 40 | 0.2 | 0 | -20 | 45 | 85 | 4.5 |
| S12 | 0.8 | Straight Line | 0.2 | 40 | 0.2 | 0 | -5 | 30 | 85 | 6.1 |
| S13 | 0.8 | Straight Line | 0.2 | 40 | 0.2 | 0 | -5 | 70 | 85 | 6.3 |
| S14 | 0.8 | Straight Line | 0.2 | 40 | 0.2 | 0 | -5 | 45 | 70 | 5.7 |
| S15 | 0.8 | Straight Line | 0.2 | 40 | 0.2 | 0 | -5 | 45 | 89 | 6.5 |
| S16 | 0.8 | Straight Line | 1.2 | 40 | 1.2 | 0 | -5 | 45 | 85 | 7.1 |
| S17 | 0.8 | Straight Line | 2.4 | 40 | 2.4 | 0 | -5 | 45 | 85 | 7 |
| S18 | 0.8 | Straight Line | 0.19 | 40 | 0.19 | 0 | -5 | 45 | 85 | 5.3 |
| S19 | 0.8 | Straight Line | 0.2 | 40 | 0.2 | 2 | -5 | 45 | 85 | 5.9 |
| S20 | 0.8 | Straight Line | 0.2 | 40 | 0.2 | 21 | -5 | 45 | 85 | 4.3 |
| S21 | 0.8 | Straight Line | 0.2 | 40 | 0.2 | 0 | 11 | 45 | 85 | 2.8 |
| S22 | 0.8 | Straight Line | 0.2 | 40 | 0.2 | 0 | -21 | 45 | 85 | 2.9 |
| S23 | 0.09 | Straight Line | 0.2 | 40 | 0.2 | 0 | -5 | 45 | 85 | 2.1 |
| S24 | 0.8 | 2 | 0.2 | 40 | 0.2 | 0 | -5 | 45 | 85 | 2.4 |
| S25 | 0.8 | Straight Line | 0.2 | 2 | 0.2 | 0 | -5 | 45 | 85 | 2.5 |

As shown in Table 1, it was confirmed that each of cutting inserts 100 of samples S1 to S22 has a longer tool life than that of each of cutting inserts 100 of samples S23 to S25.

The flank angle of each of first cutting edge portion 1, second cutting edge portion 2, and third cutting edge portion 3 is 3° in cutting insert 100 of sample S8 and is 2° in cutting insert 100 of sample S19. As shown in Table 1, it was confirmed that cutting insert 100 has a long tool life when the flank angle of each of first cutting edge portion 1, second cutting edge portion 2, and third cutting edge portion 3 is 3° or more.

The flank angle of each of first cutting edge portion 1, second cutting edge portion 2, and third cutting edge portion 3 is 20° in cutting insert 100 of sample S9 and is 21° in cutting insert 100 of sample S20. As shown in Table 1, it was confirmed that cutting insert 100 has a long tool life when the flank angle of each of first cutting edge portion 1, second cutting edge portion 2, and third cutting edge portion 3 is 20° or less.

The lateral rake angle (seventh angle θ7) of second cutting edge portion 2 is 10° in cutting insert 100 of sample S10 and is 11° in cutting insert 100 of sample S21. As shown in Table 1, it was confirmed that cutting insert 100 has a long tool life when seventh angle θ7 is 10° or less.

The lateral rake angle (seventh angle θ7) of second cutting edge portion 2 is - 20° in cutting insert 100 of sample S11 and is -21° in cutting insert 100 of sample S22. As shown in Table 1, it was confirmed that cutting insert 100 has a long tool life when seventh angle θ7 is -20° or more.

The lateral cutting edge angle (fifth angle θ5) of first cutting edge portion 1 is 30° in cutting insert 100 of sample S12 and is 70° in cutting insert 100 of sample S13. As shown in Table 1, it was confirmed that cutting insert 100 has a long tool life when fifth angle θ5 is 30° or more and 70° or less.

The lateral cutting edge angle (sixth angle θ6) of second cutting edge portion 2 is 70° in cutting insert 100 of sample S14 and is 89° in cutting insert 100 of sample S15. As shown in Table 1, it was confirmed that cutting insert 100 has a long tool life when sixth angle θ6 is 70° or more and 89° or less.

In each of cutting inserts 100 of samples S26 to S32, the flank angle of first flank region 71 is 0°. The flank angle of second flank region 72 is 3° or more and 20° or less. The area of first flank region 71 is defined as a first area SN. The area of second flank region 72 is defined as a second area SP. A value obtained by dividing first area SN by the sum of first area SN and second area SP is 0.05 or more and 0.95 or less. The flank angle of first ridgeline region 81 is 0°. The flank angle of second ridgeline region 82 is 3° or more and 20° or less. The length of first ridgeline region 81 is defined as a first length LN. The length of second ridgeline region 82 is defined as a second length LP. A value obtained by dividing first length LN by the sum of first length LN and second length LP is 0.05 or more and 0.95 or less.

**[Table 2]**

| Item | First Cutting Edge | Second Cutting Edge | First Connection Portion | Third Cutting Edge | Second Connection Portion | Flank Angle of Each of First to Third Cutting Edges | SN/ (SN+ SP) | LN/ (LN+ LP) | θ7 | θ5 | θ6 | Tool Life |
|---|---|---|---|---|---|---|---|---|---|---|---|---|
| Unit | mm | mm | mm | mm | mm | ° | - | - | ° | ° | ° | km |
| S26 | 0.8 | Straight Line | 0.2 | 40 | 0.2 | 7 | 0.5 | 0.7 | -5 | 45 | 85 | 8.1 |
| S27 | 0.8 | Straight Line | 0.2 | 40 | 0.2 | 3 | 0.5 | 0.7 | -5 | 45 | 85 | 7.6 |
| S28 | 0.8 | Straight Line | 0.2 | 40 | 0.2 | 20 | 0.5 | 0.7 | -5 | 45 | 85 | 6.2 |
| S29 | 0.8 | Straight Line | 0.2 | 40 | 0.2 | 7 | 0.05 | 0.7 | -5 | 45 | 85 | 6.9 |
| S30 | 0.8 | Straight Line | 0.2 | 40 | 0.2 | 7 | 0.95 | 0.7 | -5 | 45 | 85 | 7.3 |
| S31 | 0.8 | Straight Line | 0.2 | 40 | 0.2 | 7 | 0.5 | 0.05 | -5 | 45 | 85 | 6.3 |
| S32 | 0.8 | Straight Line | 0.2 | 40 | 0.2 | 7 | 0.5 | 0.95 | -5 | 45 | 85 | 7.5 |

The flank angle of second flank region 72 is 3° in cutting insert 100 of sample S27 and is 20° in cutting insert 100 of sample S28. As shown in Table 2, it was confirmed that cutting insert 100 has a long tool life when the flank angle of second flank region 72 is 3° or more and 20° or less.

As shown in Table 2, it was confirmed that cutting insert 100 has a long tool life when the value obtained by dividing first area SN by the sum of first area SN and second area SP is 0.05 or more and 0.95 or less.

As shown in Table 2, it was confirmed that cutting insert 100 has a long tool life when the value obtained by dividing first length LN by the sum of first length LN and second length LP is 0.05 or more and 0.95 or less.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1 first cutting edge portion; 1a first region; 1b second region; 2 second cutting edge portion; 3 third cutting edge portion; 4 fourth cutting edge portion; 5 through hole; 6 cutting edge member; 7 base metal; 8 counterbore portion; 10 cutting edge; 11 first connection cutting edge portion; 12 second connection cutting edge portion; 20 ridgeline; 21 first ridgeline portion; 22 second ridgeline portion; 30 flank face; 31 first flank face portion; 32 second flank face portion; 33 third flank face portion; 34 fourth flank face portion; 35 fifth flank face portion; 36 sixth flank face portion; 37 seventh flank face portion; 40 side surface portion; 41 first side surface region; 42 second side surface region; 43 third side surface region; 44 fourth side surface region; 45 fifth side surface region; 46 sixth side surface region; 47 seventh side surface region; 50 rake face; 51 first rake face portion; 52 second rake face portion; 60 bottom surface; 71 first flank region; 72 second flank region; 81 first ridgeline region; 82 second ridgeline region; 91 first cutting portion; 92 second cutting portion; 100 cutting insert; 150 holder; 160 retention member; 161 insertion portion; 162 main body portion; 163 attachment hole; 170 fastening screw; 200 workpiece; 201 outer peripheral surface; 202 end surface; A1 first feed direction; A2 second feed direction; B1 third feed direction; B2 fourth feed direction; C straight line; D line-of-sight direction; LN first length; LP second length; R rotation direction; SN first area; SP second area; X rotation axis; θ1 first angle; θ2 second angle; θ3 third angle; θ4 fourth angle; θ5 fifth angle; θ6 sixth angle; θ7 lateral rake angle; θ8 apex angle.

## Claims

1. A cutting insert having a surface involved in cutting, the surface being composed of at least one of a cBN-based sintered material, a diamond-based sintered material, a ceramic, a cermet, or a cemented carbide,
the cutting insert comprising: a rake face; a flank face; and a cutting edge constituted of a ridgeline between the rake face and the flank face, wherein
the cutting edge has
a first cutting edge portion for corner processing,
a second cutting edge portion for pulling processing, and
a third cutting edge portion for finished-surface processing,
a first connection cutting edge portion that connects the first cutting edge portion and the third cutting edge portion, and
a second connection cutting edge portion that connects the second cutting edge portion and the third cutting edge portion,
the third cutting edge portion is disposed between the first cutting edge portion and the second cutting edge portion,
the first cutting edge portion has a curved shape,
a curvature radius of the first cutting edge portion is 0.1 mm or more and 2.4 mm or less,
the second cutting edge portion has a straight line shape or a curved shape having a curvature radius of 3 mm or more,
the third cutting edge portion has a straight line shape or a curved shape having a curvature radius of 3 mm or more, and
each of the first connection cutting edge portion and the second connection cutting edge portion has a curved shape.

2. The cutting insert according to claim 1, wherein a curvature radius of each of the first connection cutting edge portion and the second connection cutting edge portion is 0.2 mm or more.

3. The cutting insert according to claim 1 or 2, wherein a flank angle of each of the first cutting edge portion, the second cutting edge portion, and the third cutting edge portion is 3° or more and 20° or less.

4. The cutting insert according to any one of claims 1 to 3, wherein
the cutting edge has a fourth cutting edge portion contiguous to the first cutting edge portion,
the first cutting edge portion is located between the third cutting edge portion and the fourth cutting edge portion,
the flank face has a first flank region and a second flank region,
the first flank region is contiguous to the fourth cutting edge portion,
the second flank region is contiguous to the first cutting edge portion, the second cutting edge portion, the third cutting edge portion, the first connection cutting edge portion, and the second connection cutting edge portion,
a flank angle of the first flank region is 0°,
a flank angle of the second flank region is 3° or more and 20° or less, and
when an area of the first flank region is defined as a first area and an area of the second flank region is defined as a second area, a value obtained by dividing the first area by a sum of the first area and the second area is 0.05 or more and 0.95 or less.

5. The cutting insert according to any one of claims 1 to 3, wherein
the cutting edge has a fourth cutting edge portion contiguous to the first cutting edge portion,
the first cutting edge portion is located between the third cutting edge portion and the fourth cutting edge portion,
the ridgeline has a first ridgeline region and a second ridgeline region,
the first ridgeline region includes the fourth cutting edge portion,
the second ridgeline region includes the first cutting edge portion, the second cutting edge portion, the third cutting edge portion, the first connection cutting edge portion, and the second connection cutting edge portion,
a flank angle of the first ridgeline region is 0°,
a flank angle of the second ridgeline region is 3° or more and 20° or less, and
when a length of the first ridgeline region is defined as a first length and a length of the second ridgeline region is defined as a second length, a value obtained by dividing the first length by a sum of the first length and the second length is more than 0.05 and 0.95 or less.

6. The cutting insert according to any one of claims 1 to 3, wherein
the cutting edge has a fourth cutting edge portion contiguous to the first cutting edge portion,
the first cutting edge portion is located between the third cutting edge portion and the fourth cutting edge portion,
the first cutting edge portion consists of a first region and a second region contiguous to the first region,
the cutting edge consists of a first cutting portion and a second cutting portion,
the first cutting portion consists of the first region, the second cutting edge portion, the third cutting edge portion, the first connection cutting edge portion, and the second connection cutting edge portion, and
the second cutting portion consists of the second region and the fourth cutting edge portion contiguous to the second region.

7. A processing method using the cutting insert according to claim 1 or 2, wherein in the pulling processing for processing a workpiece using the second cutting edge portion, a lateral rake angle of the second cutting edge portion is -20° or more and 10° or less.

8. A processing method using the cutting insert according to claim 1 or 2, wherein
in pushing processing, a lateral cutting edge angle of the first cutting edge portion is 30° or more and less than 70°, and
in the pulling processing, a lateral cutting edge angle of the second cutting edge portion is 70° or more and less than 89°.
